# FASCICULE DE BREVET EUROPEEN

(11) **EP 0 696 806 B1**
(45) Date de publication et mention de la délivrance du brevet: **14.01.1998**
(21) Numéro de dépôt: 95420226.3
(22) Date de dépôt: 02.08.1995
(51) Int. Cl.: G21C 19/20, G21C 19/16

(54) **Installation pour la mise en place d'assemblages de combustible nucléaire**
Einrichtung zum Positionieren von Kernbrennstabbündeln
Installation for the positioning of nuclear fuel assemblies

(30) Priorité: 12.08.1994 FR 9410134
(43) Date de publication de la demande: 14.02.1996
(73) Titulaire: REEL S.A., F-69450 Saint Cyr au Mont d'Or (FR)
(72) Inventeur: Leveugle, Jean, F-69006 Lyon (FR)
(74) Mandataire: Laurent, Michel

(56) Documents cités:
- EP-A- 0 220 117
- DE-A- 1 464 967
- FR-A- 2 184 488
- FR-A- 2 614 128
- PATENT ABSTRACTS OF JAPAN vol. 14, no. 477 (P-1118) 17 Octobre 1990 & JP-A-02 193 099 (MITSUBISHI HEAVY IND) 30 Juillet 1990

## Description

### Domaine technique

L'invention concerne une installation pour la mise en place d'assemblages de combustible nucléaire. Elle se rapporte plus précisément à un outil permettant le guidage des assemblages lors de cette mise en place.

### Art antérieur

Comme on le sait, la cuve d'un réacteur comprend des éléments ou assemblages de crayons combustibles verticaux, disposés côte à côte sur une plaque support dite "plaque de coeur", qui présente une pluralité d'emplacements, de forme carrée, disposés côte à côte dans une forme générale géométrique essentiellement orthogonale régulière. Cette plaque est équipée d'un réseau de trous appelés "trous d'eau", destinés à permettre la circulation de l'eau selon la longueur des assemblages.

Chaque assemblage est posé sur un emplacement précis de la plaque de coeur qui, à cet effet, présente des tenons mâles coopérant avec des trous femelles placés à cet effet sur la face inférieure de l'assemblage.

Pour homogénéiser le rayonnement d'énergie dans le volume du coeur, on dispose les assemblages sur la plaque de coeur en fonction de leur degré d'usure. Typiquement, on fractionne la plaque de coeur en trois zones. On place les éléments neufs en périphérie, les élements ayant subi un cycle d'expoitation en zone médiane et les éléments les plus usagés au centre du coeur, tout ceci pour éviter de créer une zone chaude au centre du réacteur.

Lors du remplacement périodique, on retire pour retraitement les assemblages épuisés et on les remplace par les assemblages provenant de la zone médiane. Les assemblages retirés de cette deuxième zone sont remplacés par les assemblages provenant de la périphérie, lesquels sont remplacés par des assemblages neufs.

Si les assemblages neufs ne présentent pas de déformation, en revanche, les assemblages usagés sont souvent déformés. De la sorte, la mise en place des assemblages usagés est souvent génée par les frottements avec les assemblages adjacents. Dans les documents EP-A-0 220 117et FR-A-2 614 128, on a proposé d'utiliser des outils de guidage pour aider la mise en place des assemblages dans les tenons de la plaque de coeur. Ces outils fonctionnent sur le principe de la coopération de la gravité et de plans inclinés pour obtenir, lors de la descente de l'assemblage, un guidage du pied de celui-ci vers le position souhaitée, l'assemblage n'étant transféré que par la tête.

Les phénomènes de déformation sont de plus en plus fréquents et accentués à cause de l'allongement des cycles d'irradiation et l'évolution des méthodes de fabrication des assemblages. Si auparavant les déformations se présentaient sous forme de flambage des gaines entrainant la déformation en arc de cercle communément appelée "banane", il est de plus en plus fréquent d'observer des déformations aléatoires et de formes très diverses. Les solutions proposées ne fonctionnent qu'avec le seul déplacement de la tête de l'assemblage, et peuvent être mal adaptées au positionnement d'assemblages très déformés. En outre, elles entraînent un fléchissement de l'assemblage entre tête et pied. Or ce fléchissement est limité par des impératifs de tenue de l'assemblage, ce qui impose des manoeuvres successives générant des pertes de temps.

Récemment, on a proposé de guider l'extrémité libre des assemblages en fin de course au moyen d'un dispositif automatique qui se déplace seul sur la plaque de coeur. Ce dispositif, qui permet de gagner du temps, est malheureusement coûteux, lourd en maintenance, et peut présenter parfois des problèmes de fiabilité.

### Exposé de l'invention

L'objet de l'invention est de pallier tous ces différents inconvénients.

Elle vise un outil de guidage simple et rustique, qui assure le déplacement du pied de l'assemblage en synchronisme avec le déplacement de la tête de l'assemblage.

L'invention concerne une installation pour la mise en place côte-à-côte d'assemblages de combustibles nucléaires sur une plaque de coeur d'un réacteur, présentant une pluralité d'emplacements contigus comportant chacun des pions mâles de positionnement et des trous femelles d'eau, et comprend :
- une machine de chargement avec un chariot de commande,
- un mât principal télescopisque, fixé par son extrémité supérieure au chariot et portant à son extrémité inférieure un grappin permettant la prise d'un assemblage à positionner, et apte à se translater selon un plan parallèle à la plaque de coeur,
- un mât secondaire télescopique, fixé parallèlement au mât principal,
- un outil de guidage du pied des assemblages.
Elle se caractérise :
- en ce que l'outil de guidage est fixé à l'extrémité inférieure du mât secondaire,
- et en ce que l'extrémité inférieure dudit mât secondaire présente des moyens pour assurer positivement le déplacement du pied de l'assemblage en synchronisme avec le déplacement de translation de la tête de l'assemblage, tout en prenant appui sur la plaque de coeur.

En d'autres termes, l'invention consiste à utiliser un second mât télescopique, parallèle au mât principal, et dont l'extrémité inférieure comporte un outil dont une partie prend appui sur la plaque de coeur, et dont l'autre partie, lors du déplacement du mât principal, déplace le pied de l'assemblage vers la position souhaitée. Il s'ensuit un meilleur guidage, un bon positionnement de l'assemblage mis en place et l'absence de fléchissement entre tête et pied de l'assemblage pendant cette opération.

Dans une forme pratique de réalisation, le moyen pour assurer le déplacement du pied de l'assemblage comprend :
- un arbre de commande coaxial au mât secondaire, apte à tourner autour de l'axe du mât et dont la rotation est commandée en synchronisme avec le déplacement du mât principal,
- et l'outil de guidage, formé de deux parties, à savoir :
   . une semelle, solidaire de l'extrémité inférieure du mât secondaire, comportant une équerre de guidage du pied de l'assemblage à positionner, et présentant en outre un secteur denté parallèle à la plaque de coeur, et solidaire de l'arbre de commande,
   . un socle, coopérant avec la semelle par une liaison glissière et une liaison crémaillère, présentant sur sa face inférieure des tenons mâles destinés à coopérer avec les trous d'eau de la plaque de coeur.

Autrement dit, le mât principal est équipé d'un deuxième mât dont l'extrémité comprend un outil en deux parties pouvant coulisser l'une par rapport à l'autre. La première partie : le socle est posé sur la plaque de coeur, enfichée dans des trous d'eau et constitue un point fixe. L'autre partie, la semelle, est fixée rigidement sur le second mât et est mobile par rapport au socle. Elle comprend deux plans perpendiculaires à la plaque de coeur formant une équerre apte à pousser le pied de l'assemblage. En outre, le second mât est creux et comporte un arbre de commande, dont l'extrémité inférieure est équipée d'un secteur denté. Lors de la rotation de l'arbre de commande, le secteur denté en tournant prend appui sur une crémaillère située sur le socle, entrainant le déplacement de la semelle. La rotation appropriée de cet arbre de commande permet donc lors du déplacement du mât principal, tout en prenant appui sur la plaque de coeur, de transmettre un effort au pied de l'assemblage et, partant, de l'amener vers la position souhaitée.

Selon une autre forme de réalisation de l'invention, le moyen pour assurer le déplacement du pied de l'assemblage comprend :
- un arbre de commande coaxial au mât secondaire, apte à se translater au sein dudit mât, et dont la translation est commandée en synchronisme avec le déplacement du mât principal,
- et l'outil de guidage, formé de deux parties, à savoir :
   . une semelle, solidaire de l'extrémité inférieure du mât secondaire, comportant une équerre de guidage du pied de l'assemblage à positionner, et présentant un organe apte à transformer le mouvement de translation de l'arbre de commande en un mouvement de translation orthogonal, ledit organe étant solidaire d'une part, de l'extrémité inférieure de l'arbre de commande, et d'autre part de l'équerre,
   . un socle, coopérant avec la semelle par une liaison glissière et avec l'organe de transformation de mouvement, présentant sur sa face inférieure des tenons mâles destinés à coopérer avec les trous d'eau de la plaque de coeur.

Dans une forme pratique, ce second mât est en lieu et place de la perche dite "perche caméra" equipant la majorité des installations, mais dont l'utilisation a généralement été abandonnée.

Avantageusement, en pratique :
- le mouvement de rotation ou de translation de l'arbre de commande est assurée par un vérin fixé au chariot et dont le piston coopère avec un bras relié à l'extrémité supérieure de l'arbre de commande;
- la liaison glissière est constituée par au moins un axe disposé sur la face du socle en regard avec la semelle et parallèle à la plaque de coeur, la semelle coulissant le long de cet axe ;
- la liaison crémaillère est formée d'une crémaillère proprement dite, placée sur le socle en regard de la semelle pour coopérer avec le secteur denté;
- l'organe de transformation est constitué d'un ciseau multibranches, dont la base des branches est articulée sur le socle, et dont l'axe d'articulation est solidaire d'une bielle, elle même solidaire de l'extrémité inférieure de l'arbre de commande par l'intermédiaire d'une bielle secondaire articulée.

### Description sommaire des dessins

La manière dont l'invention peut être réalisée et les avantages qui en découlent ressortiront mieux de l'exemple de réalisation qui suit, à l'appui des figures annexées.

La figure 1 est une vue générale de la machine de chargement.

La figure 2 est un schéma montrant les mouvements et les liaisons principaux entre les différents éléments selon une première forme de réalisation de l'invention.

La figure 3 est une vue de dessus du socle et de la semelle.

La figure 4 est une vue en perspective d'une manière de réaliser la semelle.

La figure 5 est une vue en perspective d'une manière de réaliser le socle. La figure 6 est une vue de coté du même socle.

La figure 7 est une représentation schématique d'une autre forme de réalisation de l'invention, dont la figure 8 est une vue du détail de l'organe de transformation de mouvement.

### Modes de réalisation de l'invention

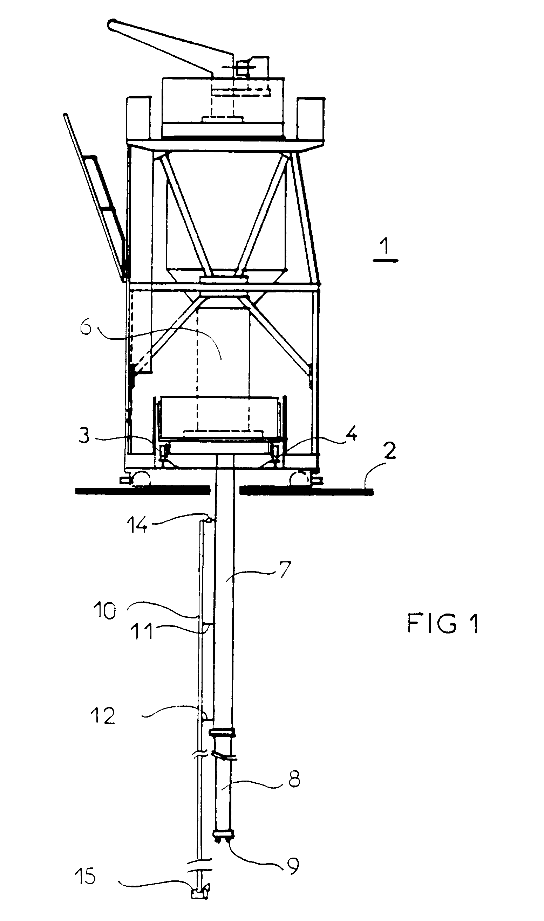

En se référant à la figure 1, la référence (1) désigne la machine qui se déplace de manière connue sur une voie (2) de roulement. Cette machine (1) présente deux poutres (3,4) le long desquelles va se déplacer horizontalement un chariot (5) portant l'outil de manutention. Cet outil est formé essentiellement d'un treuil non représenté car il est disposé dans la machinerie (6) et d'un ensemble tube fixe (7)- tube télescopique (8) coaxiaux. L'extrémité du tube télescopique (8) est équipée de moyens de préhension (9), à savoir un grappin.

L'invention se caractérise par l'utilisation d'un deuxième bras télescopique (10) fixé parallèlement au tube (7) formant le mât principal par des attaches rigides (11,12). Ce deuxième tube télescopique remplace avantageusement la perche sur laquelle est fixée une caméra dans les installations existantes. Ce deuxième mât (10) comprend un arbre de commande (13) qui est relié, à son extrémité supérieure, au bâti du chariot par un vérin (14). A l'autre extrémité, le mât secondaire (10) est rattaché à l'outil de guidage (15), objet de l'invention.

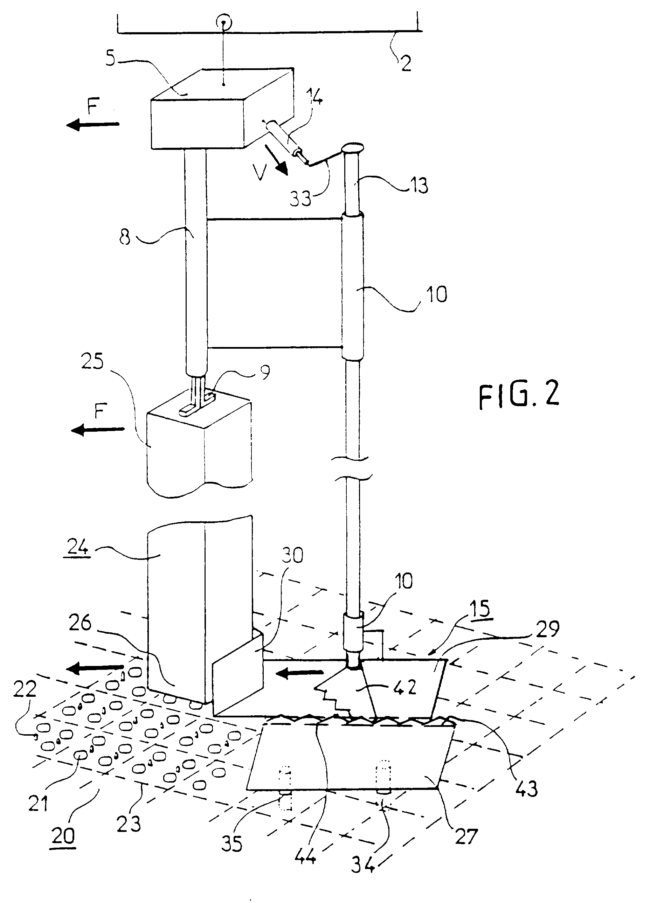

La figure 2 est une représentation schématique simplifiée de l'installation. Elle ne montre ni les formes précises, ni les dimensions, ni le nombre exact des différents éléments intervenant dans l'installation. Certaines parties ont été grossies pour faciliter la compréhension. Cette figure illustre les liaisons mécaniques entre les diverses pièces agissant lors de la mise en place des assemblages.

La plaque de coeur (20) telle que représentée, comprend un quadrillage de trous d'eau (21) et de pions de centrage (22). Chaque emplacement (23) reçoit un assemblage (24).

L'installation comprend en tant qu'organes principaux:
- le chariot (5),
- le mât principal (7) équipé d'un grappin (9),
- un mât secondaire (10) comprenant un arbre de commande (13),
- un outil de guidage (15) composé de deux parties, à savoir :
   . un socle (27) équipé de tétons (34,35) de positionnement,
   . et une semelle (29) équipée d'une équerre de poussée (30).

L'installation selon l'invention permet de déplacer les assemblages (24) simultanément par leur tête (25) et leur pied (26).

Le chariot (5) permet le déplacement du mât principal (7) dont l'extrémité inférieure comprend le grappin (9) qui agrippe la tête (25) de l'assemblage (24).

Le mât secondaire (10) est fixé parallèlement au mât principal (7). Sa partie inférieure est fixée rigidement à la semelle (29) de l'outil (15). Le mât secondaire (10) est creux et contient un arbre de commande (13) destiné à tourner à l'intérieur du mât secondaire (10). La mise en rotation est assurée grace au vérin (14) qui est relié, d'une part à un bras (33) solidaire de l'extrémité supérieure de l'arbre de commande (13), et d'autre part, à une partie du chariot (5). L'extrémité inférieure de l'arbre de commande (13) est reliée à des paliers (40,41) lui permettant de pivoter par rapport à la semelle (29) de l'outil (15). Au niveau de la semelle (29), l'arbre de commande (13) comporte un secteur denté (42) qui lui est perpendiculaire. Ainsi, lors de la rotation de l'arbre de commande (13), le secteur denté (42) pivote par rapport à la semelle (29).

La semelle (29) présente à l'extrémité dirigée vers l'assemblage (24), une équerre (30) composée de deux plans verticaux orthogonaux (31,32) destinés à venir pousser les faces verticales du pied (26) de l'assemblage (24).

L'autre partie de l'outil (15) est constituée par le socle (27). Celui-ci présente en partie inférieure deux tétons (34,35) tronconiques et destinés à pénétrer dans les trous d'eau (21) pour ancrer le socle (27) sur la plaque de coeur (20) et ainsi créer un point fixe qui sert d'appui lors de la phase de déplacement de l'assemblage (24).

Le socle (27) est relié à la semelle (29) par une liaison glissière (43) ayant pour axe la direction de déplacement de l'assemblage. Ainsi, lorsque le socle (27) est enclenché dans la plaque (20) de coeur, la semelle (29) peut se déplacer selon la direction souhaitée.

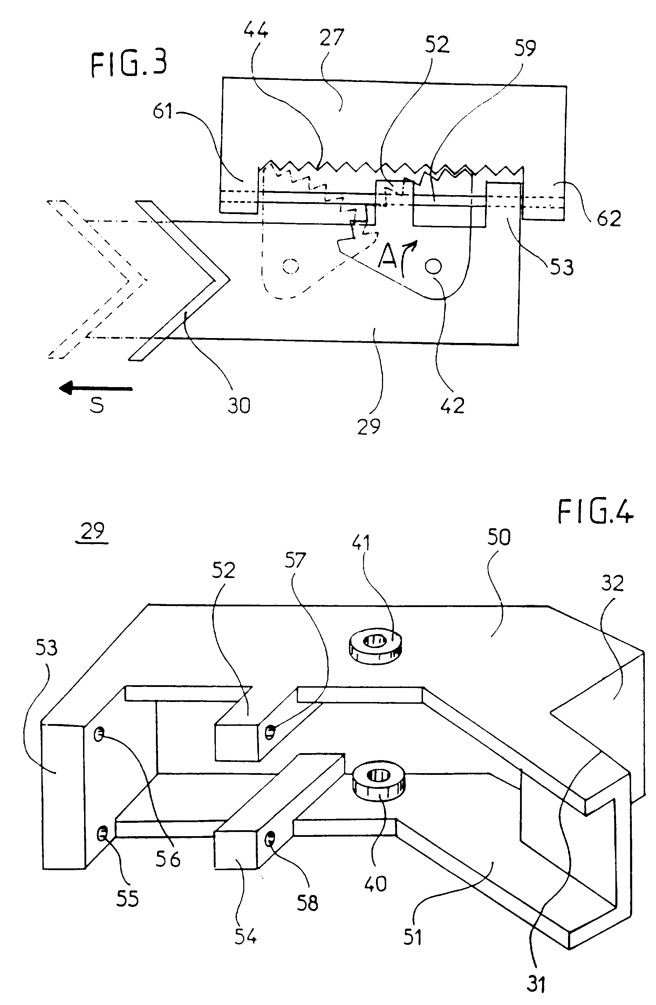

En outre, le socle (27) comporte, sur sa face verticale en regard de la semelle (29), une crémaillère (44) horizontale destinée à coopérer avec le secteur denté (42) porté par l'arbre de commande (13). Ainsi, lorsque le secteur denté (42) pivote (dans le sens indiqué par la flèche A), il prend appui sur la crémaillère (44) et l'arbre de commande (13) se déplace par rapport au socle (27) selon une direction parallèle à la crémaillère (44) (symbolisé par la flèche S). Il s'ensuit que le mât secondaire (10) qui contient l'arbre de commande (13), se déplace dans la même direction et donc entraine la semelle (29). Autrement dit et comme illustré à la figure 3, la rotation de l'arbre de commande (13) (flèche A) entraine le déplacement de la semelle (29) par rapport au socle (27) selon une direction parallèle à la crémaillère (44) (flèche S).

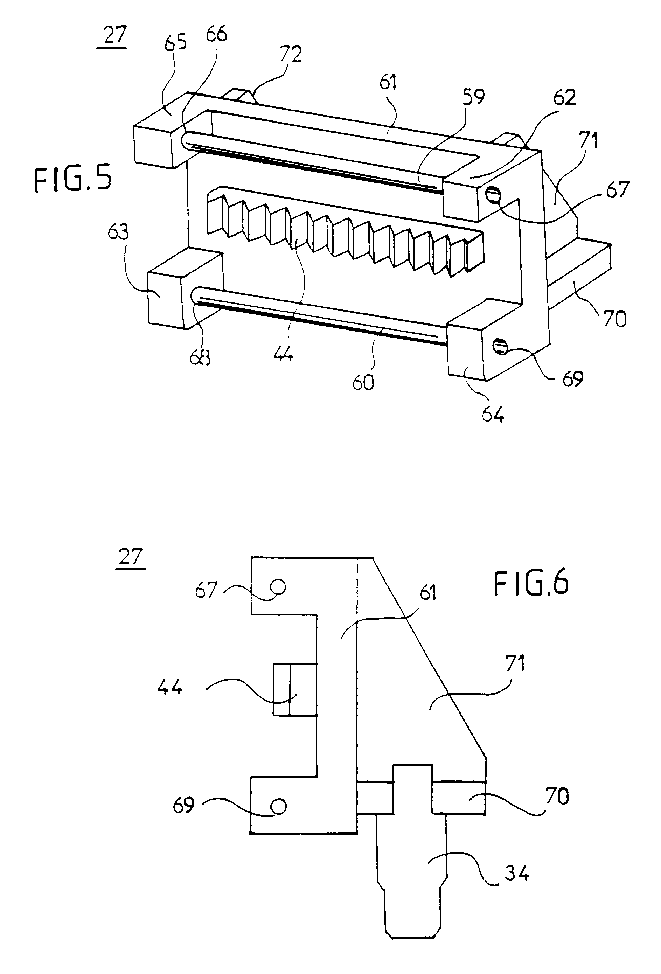

Les figures 4, 5 et 6 illustrent des manières de réaliser la semelle (29) et le socle (27).

La semelle (29) comprend:
- deux parties planes (50,51), parallèles à la plaque de coeur (20) et placés de part et d'autre du secteur denté (42),
- deux plans (31,32) formant l'équerre (30) destinée à pousser le pied (26) de l'assemblage (24),
- des longerons (52,53,54) portant des trous (55,56,57,58) destinés à coulisser autour des axes (59,60) portés par le socle (27) et formant la liaison glissière (43),
- deux paliers (40,41) destinés à assurer le pivotement de l'arbre de commande (13) par rapport à la semelle (29).

Le socle (27) comprend :
- une face verticale (61) portant :
   . la crémaillère (44) placée au centre de la face, horizontalement et en regard de la semelle (29),
   . les longerons (62-65) implantés perpendiculairement à la face (61) et percés de trous (66-69) destinés à recevoir les axes (59,60) de la liaison glissière (43),
- une face horizontale (70) implantée perpendiculairement au bas de la face verticale (61), l'ensemble étant rigidifié par deux équerres (71,72),
- deux tétons (34,35) implantés perpendiculairement à la face horizontale (70) et ayant une forme légèrement tronconique pour assurer un bon centrage lors de leur pénétration dans les trous d'eau (21).

Le fonctionnement de l'installation selon cette première forme de réalisation peut être illustré en décrivant la manoeuvre de dépose d'un assemblage.

Après la prise par le mât principal (7), de l'assemblage (24), celui-ci est descendu grâce à l'allongement du bras télescopique (8), de manière décalée par rapport aux assemblages déjà positionnés, afin d'éviter les frottements induits par les déformations. La descente peut s'effectuer à une vitesse comprise entre 6 et 15 m/mn. L'assemblage (24) se retouve à la verticale de l'emplacement situé en diagonale de l'emplacement fi-nal. Cette descente peut s'effectuer au moyen d'un treuil avec câble traditionnel, ou avec l'aide d'un ruban métallique, susceptible de se rembobiner sur une seule largeur dudit ruban. De la sorte, compte tenu que le tambour destiné à recevoir le ruban est de largeur à peine supérieure à celui-ci, on peut diminuer avantageusement l'encombrement latéral, ce qui s'avère particulièrement interessant, compte tenu du peu de place disponible à ce niveau.

Dans le même temps, le second mât (10), lui aussi télescopique est allongé jusqu'à proximité de la plaque de coeur. L'outil (15) est alors prêt à toucher la plaque (20). La position du socle (27) est telle que les tétons (34,35) sont au dessus des trous d'eau. La forme tronconique des tétons (34,35) facilite le centrage. A partir de ce moment, le socle (27) est enclenché dans la plaque de coeur (20) et constitue un point fixe. Le mât principal (8) est descendu de telle sorte que le pied (26) de l'assemblage (24) ne touche pas les pions de positionnement (22). L'équerre (30) de poussée est en regard de deux des faces verticales du pied (26) de l'assemblage (60).

Ensuite, s'enclenche la phase d'approche finale (voir figure 2). Le chariot (5) est déplacé de sorte à amener l'assemblage au dessus de sa position souhaitée (suivant la flèche F). Dans ce même mouvement, le second arbre est entrainé dans sa partie haute par le mât principal. Le vérin (14) est alors actionné (suivant la flèche V) de sorte que l'arbre de commande (13) pivote dans le second arbre (10) (suivant la flèche A), entraine la rotation du secteur denté (42) (suivant la flèche A), qui prend appui sur la crémaillère (44) du socle (27) qui constitue le point fixe du mouvement. Il s'ensuit que la semelle (29) se translate (suivant la flèche S) et pousse, grâce à l'équerre (30), le pied (26) de l'assemblage (24) selon une diagonale parallèle à celle parcourue par la tête (25).

En dernier lieu, le mât principal termine la descente pour engager le pied (26) de l'assemblage (24) dans les pions (22) de la plaque (20). Cette opération est garantie par un positionnement rigoureux obtenu grâce au guidage préalable du pied (26).

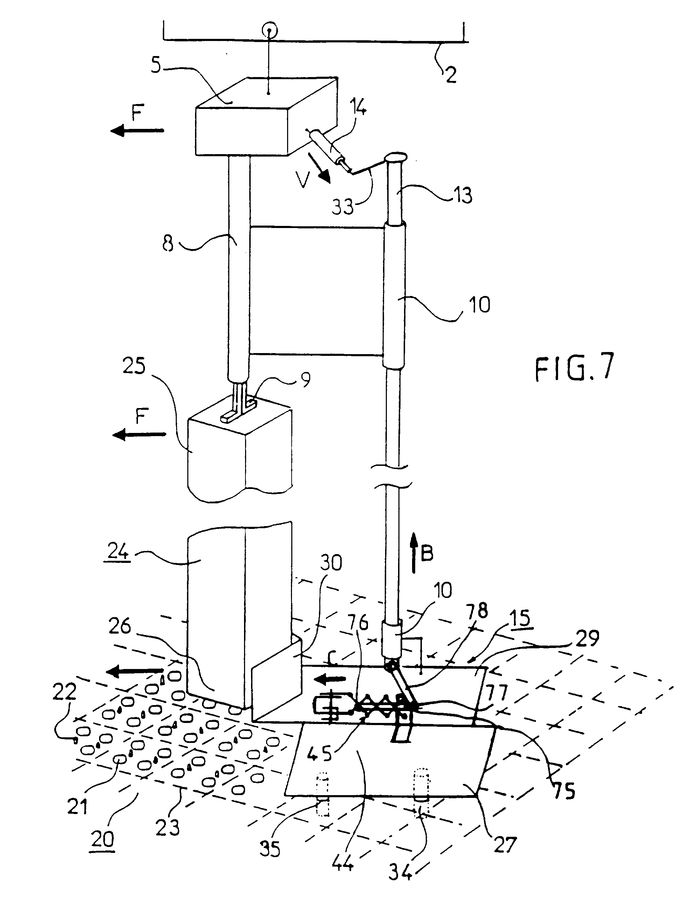

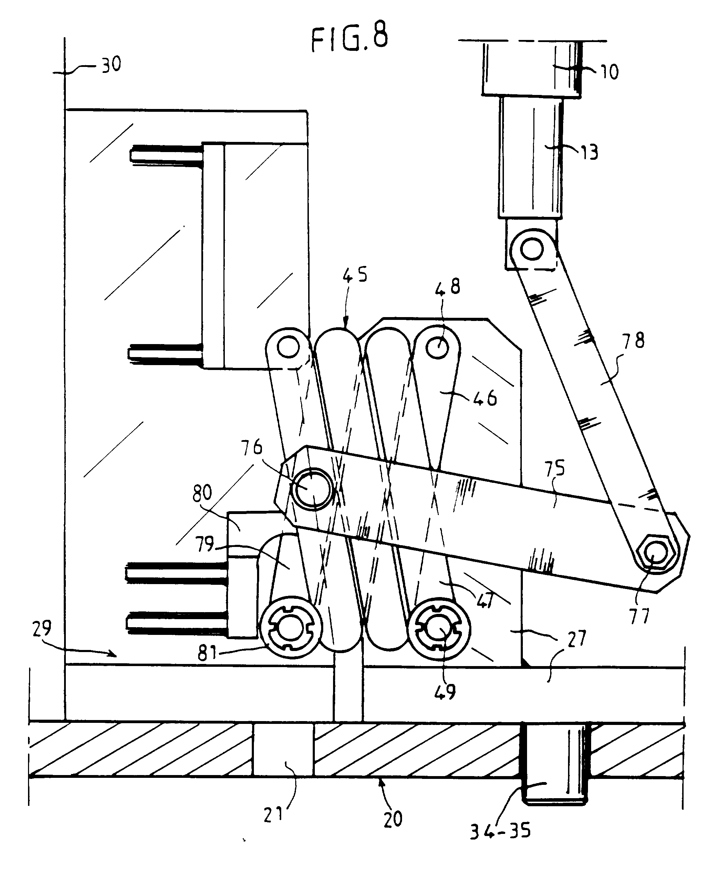

On a décrit en liaison avec les figures 7 et 8 une autre forme de réalisation de l'invention. Pour l'essentiel, l'installation comprend les mêmes éléments que ceux décrit précédemment. Seule est modifiée la manière de déplacer la semelle (29) et l'équerre de poussée (30).

Ainsi, le mouvement de translation horizontale de l'équerre (30) est assuré au moyen d'une sorte de ciseaux (45) multibranches, dont l'extrémité est solidarisée à la semelle (29) au voisinage de l'équerre (30). La base (46, 47) de ces ciseaux est solidarisée sur le socle (27) au niveau de deux points d'articulation (48, 49), de telle sorte à former point d'appui pour l'action desdits ciseaux. Enfin, l'actionnement proprement dit des ciseaux (45) s'effectue au moyen d'une bielle (75), dont l'une des extrémités est articulée au niveau de l'axe d'articulation (76) des ciseaux (45), et dont l'autre extrémité est solidarisée et articulée en (77) à une bielle secondaire (78), elle même articulée à l'extrémité inférieure de l'arbre de commande (13), ainsi que l'on peut bien l'observer sur la figure 8.

On conçoit ainsi, que lorsque l'arbre de commande remonte au sein du mât secondaire (10) selon la flèche B, la bielle secondaire (78) induit le déplacement de la bielle principale (75) selon une direction perpendiculaire à la remontée, selon la flèche C représentée sur la figure 7, induisant à son tour, de par la solidarisation de la base des ciseaux (45) sur le socle (27), la fermeture desdits ciseaux, et partant, la progression de la semelle (29) et donc de l'équerre (30) selon cette même direction. Par ailleurs, la fermeture de l'extrémité desdits ciseaux (45) est réalisable, compte tenu du mouvement possible de l'une des extrémités (79) des ciseaux, venant prendre appui en remontant contre une butée (80) prévue à cet effet. De fait, et afin de faciliter cette remontée, l'extrémité en question (79) est pourvue d'un galet (81) monté fou en rotation.

Il découle de la description qui précède que l'installation selon l'invention présente l'avantage principal de permettre un guidage du pied des assemblages en synchronisme avec le déplacement de la tête des mêmes assemblages et ceci en prenant appui sur la plaque de coeur.Il s'ensuit que cette installation permet de manipuler des assemblages ayant subi des déformations relativement importantes.

En outre, elle n'applique pas de fléchissement aux assemblages à déplacer et donc simplifie les manoeuvres de dépose et partant, permet de gagner du temps sur la mise en place des assemblages et ainsi, de réduire la durée des opérations de maintenance.

Enfin, l'architecture de l'installation permet un contrôle de la position du pied et de la tête de l'assemblage, ce qui permet en cas de défaut, d'agir sur le dispositif de commande de la machine de chargement pour assurer un déplacement adéquat.

## Revendications

1. Installation pour la mise en place côte-à-côte d'assemblages (24) de combustible nucléaire sur une plaque de coeur (20) d'un réacteur, présentant une pluralité d'emplacements (23) contigus comportant chacun des pions mâles (22) de positionnement et des trous femelles d'eau (21), comprenant :
- une machine de chargement (1) avec un chariot de commande (5),
- un mât principal télescopique (7 ,8), fixé par son extrémité supérieure au chariot (5), et portant à son extrémité inférieure un grappin (9), permettant la prise d'un assemblage (24) à positionner, et apte à se translater selon un plan parallèle à la plaque de coeur (20),
- un mât secondaire (10) télescopique, fixé parallèlement au mât principal (7),
- un outil de guidage (15) du pied (26) des assemblages (24),
***caractérisée*:**
- en ce que l'outil de guidage (15) est fixé à l'extrémité inférieure du mât secondaire (10),
- et en ce que l'extrémité inférieure du mât secondaire (10) présente des moyens pour assurer positivement le déplacement du pied (26) de l'assemblage (24) en synchronisme avec le déplacement de translation de la tête (25) de l'assemblage (24) tout en prenant appui sur la plaque de coeur (20).

2. Installation selon la revendication 1, ***caractérisée*** en ce que le moyen pour assurer le déplacement du pied (26) de l'assemblage (24) comprend :
- un arbre de commande (13) coaxial avec le mât secondaire (10) et apte à tourner autour de l'axe du mât (10), et dont la rotation est commandée en synchronisme avec le déplacement du mât principal (7),
- et un outil de guidage (15) formé de deux parties, à savoir :
. une semelle (29), solidaire de l'extrémité inférieure du mât secondaire (10), comportant une équerre (30) de guidage du pied (26) de l'assemblage à positionner, présentant en outre un secteur denté (42) parallèle à la plaque de coeur (20), et solidaire de l'arbre de commande (13),
. un socle (27) coopérant avec la semelle (29) par une liaison glissière (43) et une liaison crémaillère (42, 44), présentant sur sa face inférieure des tétons mâles (34,35) destinés à coopérer avec les trous d'eau (21) de la plaque de coeur (20).

3. Installation selon la revendication 1, ***caractérisée*** en ce que le moyen pour assurer le déplacement du pied (26) de i'assemblage (24) comprend :
- un arbre de commande (13) coaxial avec le mât secondaire (10), et apte à se translater au sein dudit mât, et dont la translation est commandée en synchronisme avec le déplacement du mât principal (7),
- et l'outil de guidage (15), formé de deux parties, à savoir :
. une semelle (29), solidaire de l'extrémité inférieure du mât secondaire (10), comportant une équerre de guidage (30) du pied (26) de l'assemblage à positionner, et présentant un organe (45, 75, 78) apte à transformer le mouvement de translation de l'arbre de commande (13) en un mouvement de translation orthogonal, ledit organe étant solidaire d'une part, de l'extrémité inférieure de l'arbre de commande (13), et d'autre part de la semelle (29),
. un socle (27), coopérant avec la semelle par une liaison glissière (43) et avec l'organe de transformation de mouvement (45, 75, 78), présentant sur sa face inférieure des tenons mâles (34, 35) destinés à coopérer avec les trous d'eau (21) de la plaque de coeur (20).

4. Installation selon l'une des revendications 1 à 3, ***caractérisée*** en ce que le mouvement de rotation ou de translation de l'arbre de commande (13) est assurée par un vérin (14) fixé au chariot (5) et dont le piston coopère avec un bras (33) relié à l'extrémité supérieure de l'arbre de commande (13).

5. Installation selon l'une des revendications 2 à 4, ***caractérisée*** en ce que la liaison glissière (43) est constituée par au moins un axe (59, 60) disposé sur la face du socle (27) en regard avec la semelle (29) et parallèle à la plaque de coeur (20), la semelle (29) coulissant le long de cet arbre (59, 60).

6. Installation selon la revendication 2, ***caractérisée*** en ce que la liaison crémaillère est formée d'une crémaillère (44) proprement dite, placée sur le socle (27) en regard de la semelle (29) pour coopérer avec le secteur denté (42).

7. Installation selon la revendication 3, ***caractérisée*** en ce que l'organe de transformation de mouvement est constitué d'un ciseau multibranches (45), dont la base (46, 47) des branches est articulée (48, 49) sur le socle (27), et dont l'axe d'articulation (76) est solidaire d'une bielle (75), elle même solidaire de l'extrémité inférieure de l'arbre de commande (13) par l'intermédiaire d'une bielle secondaire articulée (78).

## Patentansprüche

1. Einrichtung zum Nebeneinanderpositionieren von Kernbrennstabbündeln (24) auf einer Kernplatte (20) eines Reaktors, welche eine Vielzahl von aneinandergrenzenden Stellflächen (23) aufweist, von denen jede erhabene Positionierungsklötze (22) und Wasserlöcher (21) umfaßt, mit folgenden Bestandteilen:
- einer Lademaschine (1) mit einem Antriebsschlitten (5),
- einem Haupt-Teleskopmast (7, 8), der mit seinem oberen Ende an dem Schlitten (5) befestigt ist und an seinem unteren Ende einen Greifer (9) zum Fassen eines zu positionierenden Bündels (24) trägt und der entlang einer zu der Kernplatte (20) parallelen Ebene verschiebbar ist,
- einem Neben-Teleskopmast (10), der parallel zum Hauptmast (7) befestigt ist,
- einem Werkzeug (15) zur Führung des Fußes (26) der Bündel (24),
**dadurch gekennzeichnet,**
- daß das Führungswerkzeug (15) am unteren Ende des Nebenmastes (10) befestigt ist
- und daß das untere Ende des Nebenmastes (10) Mittel aufweist, welche die Verschiebung des Fußes (26) des Bündels (24) synchron zu der Verschiebung des Kopfes (25) des Bündels (24) gewährleisten, während sie sich auf die Kernplatte (20) stützen.

2. Einrichtung nach Anspruch 1, **dadurch gekennzeichnet**, daß das Mittel zur Gewährleistung der Verschiebung des Fußes (26) des Bündels (24) folgendes umfaßt:
- eine zu dem Nebenmast (10) koaxiale Antriebswelle (13), die um die Achse des Mastes (10) drehbar ist und deren Drehung synchron zu der Verschiebung des Hauptmastes (7) gesteuert ist,
- und ein Führungswerkzeug (15), das aus folgenden zwei Teilen gebildet ist:
· einer mit dem unteren Ende des Nebenmastes (10) verbundenen Fußplatte (29), die ein Winkeleisen (30) zur Führung des Fußes (26) des zu positionierenden Bündels umfaßt und welche außerdem ein zu der Kernplatte (20) paralleles Zahnsegment (42) aufweist, das mit der Antriebswelle (13) verbunden ist,
· einem mit der Fußplatte (29) mittels einer Gleitschienenverbindung (43) und einer Zahnstangenverbindung (42, 44) zusammenwirkenden Sockel (27), der auf seiner Unterseite erhabene Zapfen (34, 35) aufweist, welche zum Zusammenwirken mit den Wasserlöchern (21) der Kernplatte (20) bestimmt sind.

3. Einrichtung nach Anspruch 1, **dadurch gekennzeichnet**, daß das Mittel zur Gewährleistung der Verschiebung des Fußes (26) des Bündels (24) folgendes umfaßt:
- eine zu dem Nebenmast (10) koaxiale Antriebswelle (13), die innerhalb des genannten Mastes verschiebbar ist und deren Verschiebung synchron zu der Verschiebung des Hauptmastes (7) gesteuert wird,
- und das Führungswerkzeug (15), das aus folgenden zwei Teilen gebildet ist:
· einer mit dem unteren Ende des Nebenmastes (10) verbundenen Fußplatte (29), die ein Winkeleisen (30) zur Führung des Fußes (26) des zu positionierenden Bündels umfaßt und welche ein Organ (45, 75, 78) zur Umwandlung der Verschiebungsbewegung der Antriebswelle (13) in eine Bewegung zur rechtwinkligen Verschiebung aufweist, wobei das genannte Organ einerseits mit dem unteren Ende der Antriebswelle (13) und andererseits mit der Fußplatte (29) verbunden ist,
· einem Sockel (27), der mit der Fußplatte mittels einer Gleitschienenverbindung (43) und mit dem Organ zur Bewegungsumwandlung (45, 75, 78) zusammenwirkt und der auf seiner Unterseite erhabene Zapfen (34, 35) aufweist, die zum Zusammenwirken mit den Wasserlöchern (21) der Kernplatte (20) bestimmt sind.

4. Einrichtung nach einem der Ansprüche 1 bis 3, **dadurch gekennzeichnet**, daß die Dreh- oder Verschiebungsbewegung der Antriebswelle (13) durch einen an dem Schlitten (5) befestigten Antriebszylinder (14) gewährleistet wird, dessen Kolben mit einem an dem oberen Ende der Antriebswelle (13) befestigten Arm (33) zusammenwirkt.

5. Einrichtung nach einem der Ansprüche 2 bis 4, **dadurch gekennzeichnet**, daß die Gleitschienenverbindung (43) aus mindestens einer Welle (59, 60) besteht, die auf der der Fußplatte (29) gegenüberliegenden und zu der Kernplatte (20) parallelen Seite des Sockels (27) angeordnet ist, wobei die Fußplatte (29) entlang dieser Welle (59, 60) gleitet.

6. Einrichtung nach Anspruch 2, **dadurch gekennzeichnet**, daß die Zahnstangenverbindung aus einer Zahnstange (44) gebildet ist, welche an dem Sockel (27) gegenüber der Fußplatte (29) angebracht ist, um mit dem Zahnsegment (42) zusammenzuwirken.

7. Einrichtung nach Anspruch 3, **dadurch gekennzeichnet**, daß das Organ zur Bewegungsumwandlung aus einer vielarmigen Schere (45) besteht, deren Grundarme (46, 47) an dem Sockel (27) angelenkt (48, 49) sind und deren Drehachse (76) fest mit einer Stange (75) verbunden ist, welche ihrerseits mit dem unteren Ende der Antriebswelle (13) über eine angelenkte Nebenstange (78) verbunden ist.

## Claims

1. Installation for fitting nuclear fuel assemblies (24) side by side on a core plate (20) of a reactor, having a plurality of contiguous locations (23), each including male locating pins (22) and female water holes (21), comprising ;
- a loading machine (1) with a control carriage (5) ;
- a main telescopic mast (7, 8) fixed by its upper end to the carriage (5) and bearing a gripper (9) at its lower end, allowing gripping of an assembly (24) to be positioned, and capable of translating along a plane parallel to the core plate (20),
- a secondary telescopic mast (10), fixed parallel to the main mast (7) ;
- a tool (15) for guiding the foot (26) of the assemblies (24) ;
characterized :
- in that the guide tool (15) is fixed to the lower end of the secondary mast (10);
- and in that the lower end of the secondary mast (10) has means for positively displacing the foot (26) of the assembly (24) in synchronism with the translation displacement of the head (25) of the assembly (24), while bearing on the core plate (20).

2. Installation according to Claim 1, characterized in that the means for displacing the foot (26) of the assembly (24) comprises ;
- a control shaft (13), coaxial with the secondary mast (10) and capable of rotating about the axis of the mast (10) and whose rotation is controlled in synchronism with the displacement of the main mast (7) ;
- and a guide tool (15) formed by two parts, namely ;
. a support (29), secured to the lower end of the secondary mast (10), including a corner piece (30) for guiding the foot (26) of the assembly to be positioned, furthermore having a toothed sector (42) parallel to the core plate (20), and secured to the control shaft (13),
. a base (27), cooperating with the support (29) via a slide linkage (43) and a rack linkage (42, 44), having on its lower face male stubs (34, 35) intended to cooperate with the water holes (21) of the core plate (20).

3. Installation according to Claim 1, characterized in that the means for displacing the foot (26) of the assembly (24) comprises :
- a control shaft (13), coaxial with the secondary mast (10) and capable of translating within the said mast, and whose translation is controlled in synchronism with the displacement of the main mast (7),
- and the guide tool (15), formed by two parts, namely :
. a support (29), secured to the lower end of the secondary mast (10), including a corner piece (30) for guiding the foot (26) of the assembly to be positioned, and having a member (45, 75, 78) capable of converting the translational movement of the control shaft (13) into an orthogonal translational movement, the said member being secured, on the one hand, to the lower end of the control shaft (13), and, on the other hand, to the support (29) ;
. a base (27) cooperating with the support via a slide linkage (43) and with the movement-conversion member (45, 75, 78) having on its lower face male tenons (34, 35), intended to cooperate with the water holes (21) in the core plate (20).

4. Installation according to one of Claims 1 to 3, characterized in that the control shaft (13) is moved in rotation or in translation by a jack (14) which is fixed to the carriage (5) and the piston of which cooperates with an arm (33) connected to the upper end of the control shaft (13).

5. Installation according to one of Claims 2 to 4, characterized in that the slide linkage (43) is constituted by at least one spindle (59, 60) arranged on the face of the base (27) facing the support (29), and parallel to the core plate (20), the support (29) sliding along this shaft (59, 60).

6. Installation according to Claim 2, characterized in that the rack linkage is formed by a rack (44) proper, placed on the base (27) facing the support (29) in order to cooperate with the toothed sector (42).

7. Installation according to Claim 3, characterized in that the movement-conversion member is constituted by a multibranch scissor arrangement (45), the bottom (46, 47) of the branches of which is articulated (48, 49) onto the base (27) and the articulation spindle (76) of which is secured to a link rod (75), itself secured to the lower end of the control shaft (13) by means of a secondary articulated link rod (78).
